# EUROPÄISCHE PATENTSCHRIFT

(11) **EP 1 268 261 B1**
(45) Veröffentlichungstag und Bekanntmachung des Hinweises auf die Patenterteilung: **14.07.2010**
(21) Anmeldenummer: 01929260.6
(22) Anmeldetag: 23.03.2001
(51) Int. Cl.: B62D 25/20

(54) **FAHRZEUGKAROSSERIEBODEN**
VEHICLE BODY BASE
FOND DE CAISSE D'UN VEHICULE

(30) Priorität: 24.03.2000 DE 10014837
(43) Veröffentlichungstag der Anmeldung: 02.01.2003
(60) Teilanmeldung: 08000428.6
(73) Patentinhaber: GM Global Technology Operations, Inc., Detroit, MI 48265-3000 (US)
(72) Erfinder: BRAND, John, 65428 Rüsselsheim (DE); BECHTOLD, Ralf-Dieter, 55278 Weinolsheim (DE); GÖRG, Christian, Andreas, 85247 Schwabhausen (DE); HOFFMANN, Georg, 55286 Wörrstadt (DE); ANDERS, Michael, 71106 Magstadt (DE)
(74) Vertreter: Strauss, Peter
(86) Internationale Anmeldenummer: PCT/DE2001/001136
(87) Internationale Veröffentlichungsnummer: WO 2001/072569

(56) Entgegenhaltungen:
- EP-A- 0 455 279
- DE-A- 2 610 299
- US-A- 5 549 349
- PATENT ABSTRACTS OF JAPAN vol. 007, no. 237 (M-250), 21. Oktober 1983 (1983-10-21) -& JP 58 126263 A (NISSAN JIDOSHA KK), 27. Juli 1983 (1983-07-27)
- PATENT ABSTRACTS OF JAPAN vol. 010, no. 231 (M-506), 12. August 1986 (1986-08-12) -& JP 61 064587 A (MAZDA MOTOR CORP), 2. April 1986 (1986-04-02)

## Beschreibung

Die Erfindung bezieht sich auf einen Fahrzeugkarosserieboden gemäß dem Oberbegriff des Anspruchs 1 und auf einen Fahrzeugkarosserieboden gemäß dem Oberbegriff des Anspruchs 5.

Derartige Karosserieböden sind in der JP 58-126263 beschrieben.

Typischerweise besteht ein solcher Boden aus einer vorderen Bodenplatte unterhalb des Fahrgastbereiches und einer hinteren Bodenplatte unterhalb des Kofferraums. Die hintere Platte liegt dabei etwas höher als die vordere Platte, da unter jener die Fahrzeughinterachse untergebracht werden muss. Der Abstand zwischen der vorderen und der hinteren Bodenplatte wird durch eine Schließwand geschlossen, die üblicherweise einteilig mit der hinteren Bodenplatte ausgeführt ist.

Häufig ist der vordere Teil der hinteren Bodenplatte zur Aufnahme einer Rücksitzbank ausgebildet. Vor allem aus diesem Grund ergibt sich die Notwendigkeit, diesem Bereich eine ausreichende Quersteifigkeit zu verleihen, damit bei einem Seitenaufprall die Fahrgastzelle möglichst wenig eingedrückt wird und die Insassen vor Verletzungen geschützt werden. Dieser Bereich wird daher durch ein L-förmiges Verstärkungsprofil mit einem Horizontal- und einem Vertikalabschnitt versteift, das sich unterhalb der hinteren Bodenplatte quer zur Fahrzeuglängsachse erstreckt und diese zu einem kastenförmigen Gebilde komplettiert, das in der Lage ist, die bei einem Seitenaufprall auftretenden Querkräfte abzustützen.

Es wurde auch schon vorgeschlagen, das Verstärkungsprofil einteilig mit der vorderen Bodenplatte auszuführen. Eine solche Vorgehensweise kann z. B. der DE 38 13 455 C2 sowie der EP 0 297 057 A1 entnommen werden.

Die Automobilindustrie beschäftigt sich schon seit einiger Zeit im Rahmen der sogenannten Plattformstrategie mit der Frage, wie Fahrzeuge mit unterschiedlichen Radständen aus sich gleichenden Karosserieteilen zusammengesetzt werden können. In diesem Zusammenhang wurde schon vorgeschlagen, die vordere und die hintere Bodenplatte jeweils unverändert zu lassen und z. B. über unterschiedlich breite Blechstreifen miteinander zu verbinden. Dieser Vorschlag kann der schon genannten EP 0 297 057 entnommen werden. Außerdem wird in der EP 455 279 B1 angeregt, die Schließwand getrennt von der vorderen sowie der hinteren Bodenplatte auszuführen und ihre Querschnittsform der jeweils gewünschten Fahrzeuggröße anzupassen. Durch eine entsprechende Faltung der Schließwand wird erreicht, dass sich die jeweils zugewandten Enden der vorderen und der hinteren Platten entweder überlappen oder auf Abstand gehalten werden, wodurch sich unterschiedliche Längen des gesamten Karosseriebodens ergeben.

In der DE 197 22 139 A1 wird vorgeschlagen, die vordere Bodenplatte so zu gestalten, dass lediglich durch eine leichte Veränderung des Presswerkzeuges eine verlängerte Version erstellt werden kann.

Die Erfindung beruht somit auf der Aufgabe, den Karosserieboden so zu gestalten, dass ohne großen Aufwand eine gegebene Form auf ein Fahrzeug mit größerem Radstand übertragen werden kann und dass diese Karosserie insbesondere im Bereich des Übergangs vom vorderen zum hinteren Teil eine ausreichende Quersteifigkeit erhält.

Diese Aufgabe wird durch die Merkmale des Anspruchs 1 bzw. 5 gelöst.

Üblicherweise weist die vordere Bodenplatte einen sogenannten Mitteltunnel auf. Dies ist eine im Querschnitt U-förmige nach oben gerichtete Ausdrückung in der vorderen Platte, die sich entlang der zentralen Längsachse des Fahrzeuges erstreckt. Die nach unten offene Seite des Tunnels wird häufig durch eine Verschlussplatte geschlossen, so dass sich eine aerodynamisch günstige untere Bodenplattenseite ergibt. Durch das so gebildete Hohlprofil kann z. B. das Auspuffrohr geführt werden. Außerdem dient der Mitteltunnel dazu, die Bodenplatte in sich zu versteifen.

Um auch den Mitteltunnel zu verlängern, weist der Verlängerungsabschnitt ein Tunnelelement mit einem Bogenabschnitt auf, der mit einem mit dem Mitteltunnel korrespondierenden U-förmigen Querschnitt versehen ist. Der Bogenabschnitt bildet somit die Verlängerung des Mitteltunnels.

Die Anbindung des Tunnelelementes an das Verstärkungsprofil und die Schließwand kann auf verschiedene Weisen gestaltet werden.

Zur Lösung des Problems sieht eine erste Ausführung vor, dass der rückwärtige Abschluss des Tunnelelements in den Vertikalabschnitt des Verstärkungsprofils übergeht, wobei vorzugsweise zwischen dem Bogenabschnitt und dem Vertikalabschnitt ein sattelförmiger Bereich ausgebildet ist.

Die Schließwand weist dazu einen Ausschnitt auf, durch den das Tunnelelement hindurchgeführt ist, um die Verbindung zum Vertikalabschnitt des Verstärkungsprofils aufnehmen zu können. Bei dieser Ausführung wird das Verstärkungsprofil aus mindestens zwei Teilen gebildet, wobei ein erstes Einzelteil vom Tunnelelement, d. h. vom Bogenabschnitt und der einen Flanke des Sattels gebildet wird. Bei den Einzelteilen, die den restlichen Abschnitten des Verstärkungsprofils bilden, handelt es sich vorzugsweise um zwei bezüglich der Mittellängsachse des Karosseriebodens symmetrisch ausgeformte Einzelteile mit jeweils einem Horizontal- und einem Vertikalabschnitt.

Im Bereich des Mitteltunnels ist der Querschnitt des Verstärkungskastens kleiner als in den Seitenbereichen, da dort noch ein wenig Platz gelassen werden muss, um die durch den Mitteltunnel geführten Elemente unter die hintere Bodenplatte führen zu können: Um auch in diesem Bereich eine ausreichende Steifigkeit zu erhalten, kann es notwendig werden, Verstärkungselemente, vorzugsweise in Form von zusätzlichen Blechen, über den Tunnelquerschnitt zu spannen.

Das oben genannte Problem wird auch dadurch gelöst, indem, um einen möglichst großen Querschnitt des Verstärkungskastens auch im Bereich des Mitteltunnels zu erreichen, das Tunnelelement einen Bogenabschnitt mit einem gleichbleibenden U-förmigen Querschnitt aufweist, der mit seiner hinteren Kante gegen die Schließwand gesetzt ist, wobei ein Teilabschnitt dieser Wand in den Querschnitt hineinragt. Dazu ist das Tunnelelement als Einzelteil ausgebildet, das an seinem hinteren Ende mit Flanschen versehen ist, die gegen die Schließwand gesetzt sind und dort mit dieser verschweißt oder anderweitig verbunden sind, wobei im Verlängerungsabschnitt des Verstärkungsprofils eine Aussparung unter dem Tunnelelement vorgesehen ist.

Der Vertikalabschnitt des Verstärkungsprofils ist auch im Tunnelbereich mit der unteren Kante der Schließwand verbunden, so dass auch hier der Verstärkungskasten im Querschnitt geschlossenen ist.

Vorzugsweise überdeckt der Teilabschnitt der Schließwand, der sich im Querschnitt des Tunnels befindet, die Querschnittsfläche nicht ganz ab, so dass ein unterer Ausschnitt verbleibt, durch den die im Mitteltunnel angeordneten Teile in den Bereich unterhalb der hinteren Bodenplatte geführt werden.

Erfindungsgemäß weist der Bogenabschnitt des Tunnelelements einen U-förmigen Querschnitt auf, der gegen die Schließwand gesetzt ist, wobei ein Teilstück der Schließwand den oberen Teil der Querschnittsfläche des Bogenabschnittes überdeckt.

Im Folgenden soll die Erfindung anhand zweier Ausführungsbeispiele näher erläutert werden. Dazu zeigen:
- Fig. 1: eine prinzipielle Darstellung der Erfindung in drei Einzelbilder a, b, c;
- Fig. 2: ein Verstärkungsprofil gemäß einer ersten Ausführungsform;
- Fig. 3: die Anbindung des Verstärkungspro- fils nach Fig. 2 an einen Seiten- schweller und die Verbindung mit einer hinteren Bodenplatte;
- Fig. 4: in Explosionsdarstellung einen Fahrzeugboden mit einem Verstär- kungsprofil gemäß einer zweiten Ausführung und
- Fig. 5: einen Querschnitt entlang der Linie V-V der Fig. 4.

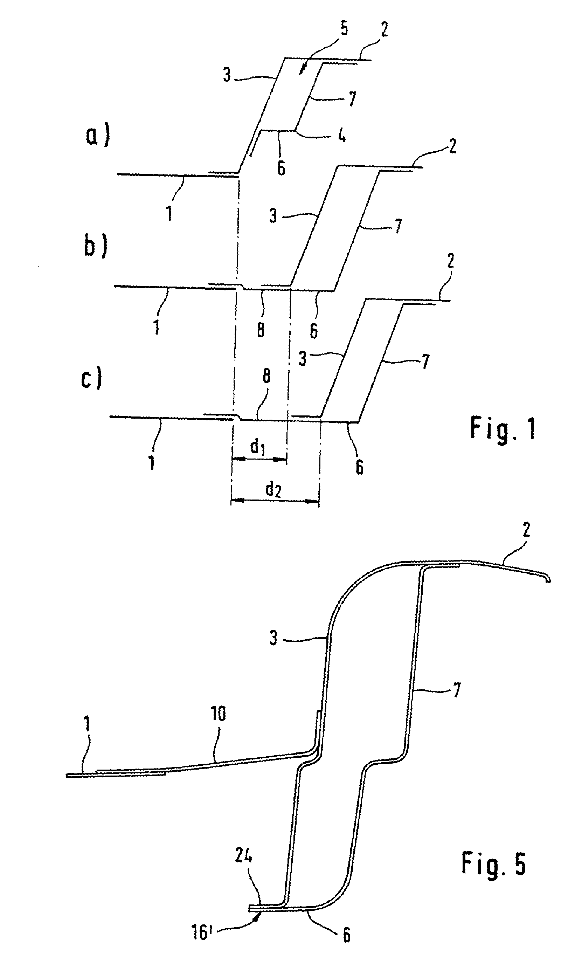

Zunächst wird auf die Fig. 1 (Teilbild a) Bezug genommen. Diese zeigt in einer Prinzipdarstellung den Längsschnitt durch einen Fahrzeugboden. Dieser besteht aus einer vorderen Bodenplatte 1 und einer hinteren Bodenplatte 2, die in der Höhe versetzt gegeneinander angeordnet sind, wobei der Höhenabstand zwischen den beiden Bodenplatten durch eine Schließwand 3, die einstückig mit der hinteren Bodenplatte ausgeführt ist, überbrückt wird. Unterhalb der hinteren Bodenplatte 2 erstreckt sich in Querrichtung ein L-förmiges Verstärkungsprofils 4 mit einem sich im Wesentlichen parallel zur Schließwand 3 erstreckenden Vertikalabschnitt 7 und einem dazu in etwa senkrecht oder senkrecht verlaufenden Horizontalabschnitt 6, wobei das Verstärkungsprofil 4 derart mit der Bodenplatte 2 und der Schließwand 3 verbunden ist, dass ein sich in Querrichtung des Fahrzeugs erstreckender Verstärkungskasten 5 ergibt.

Um Fahrzeuge mit verschiedenen Radabständen darstellen und dabei die vordere und die hintere Bodenplatte in ihrer Form beibehalten zu können, wird zwischen den beiden Platten 1, 2 ein Verlängerungselement (Teilbild b) gesetzt, das sich als Verlängerung des Horizontalabschnittes 6 in einen Verlängerungsabschnitt 8 darstellt. Dazu ist das L-förmige Verstärkungsprofil 4 ein wenig vergrößert, so dass der Horizontalabschnitt 6 unter die untere Kante der Schließwand 3 geführt werden kann. Die vordere Kante des Verlängerungsabschnittes 8 überlappt mit der vorderen Bodenplatte 1 und wird mit dieser verbunden. Bei einer Ausführung der Karosserieelemente in Stahl werden die Teile üblicherweise miteinander verschweißt. Diese Schweißnaht verläuft im Abstand zur Schließwand 3. Je nachdem wie groß der Abstand zwischen den beiden Platten 1 und 2 sein soll, wird die Längsausdehnung des Verlängerungsabschnitts bestimmt. Je nach Ausführung stellen sich die Verlängerungen d₁ bzw. d₂ ein, die jeweils mit bestimmten Radständen verknüpft sind (Teilbild b bzw. c).

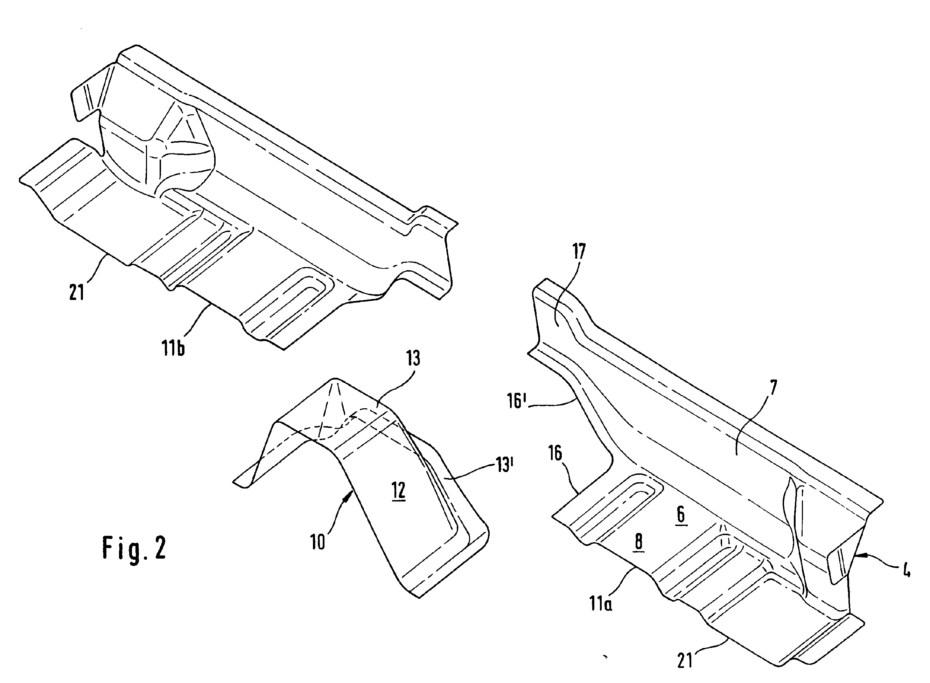

Fig. 2 zeigt eine erste Ausführungsform des Verstärkungsprofils 4. Dieses besteht aus drei Einzelteilen, nämlich einem Tunnelelement 10 sowie zwei symmetrisch zueinander ausgebildeten Profilelementen 11a, 11b. Das Tunnelelement 10 besteht aus einem Bogenabschnitt 12, der im Querschnitt einem Mitteltunnel in der vorderen Bodenplatte entspricht und damit eine Verlängerung diese Tunnels darstellt. Die vordere Querschnittsfläche des Bogenelementes 12 ist frei, während die hintere Querschnittsfläche im oberen Bereich durch eine Abschlussblech 13 verdeckt ist, das eine U-förmige Aussparung 13' freilässt, deren Querschnittsfläche damit kleiner ist als die im Bogenabschnitt 12.

Die beiden symmetrisch zueinander ausgebildeten Profilelemente 11a, 11b weisen jeweils einen Horizontalabschnitt 6, einen Vertikalabschnitt 7 und einen Verlängerungsabschnitt 8 auf. Zusammengesetzt weisen sie im Bereich des Horizontalabschnittes eine Aussparung 16 auf, die vom Bogenabschnitt 12 des Tunnelelementes 10 überspannt wird. Auch der Vertikalabschnitt 7 weist eine Aussparung 16' auf, die der Aussparung 13' im Abschlussblech 13 entspricht. Setzt man die Elemente zusammen, so bildet sich zwischen dem Abschlussblech 13 und dem Horizontalabschnitt 6 ein Sattel 17 aus.

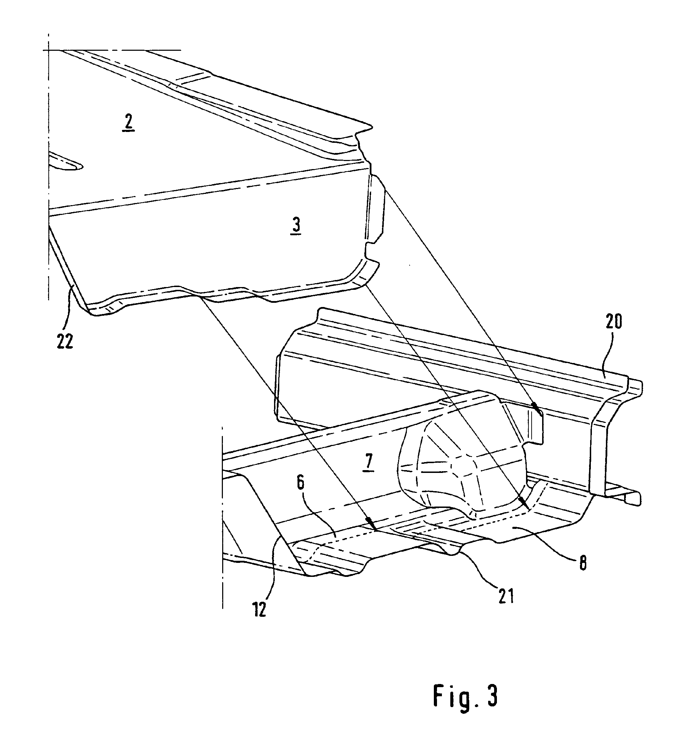

Fig. 3 zeigt die Einpassung des zusammengesetzten Verstärkungsprofils 4 in die Fahrzeugkarosserie. Die Seitenkanten schließen jeweils an einen Seitenschweller 20 an, wobei in der Fig. 3 lediglich die linke Fahrzeugseite dargestellt ist. Die vorderen Kanten 21 des Verlängerungsabschnittes 8 und des Tunnelelements 10 werden mit der vorderen Bodenplatte 2 verbunden. Wie die Fig. 3 weiterhin zeigt, wird auf diese Anordnung die hintere Bodenplatte 2 mit der Schließwand 3 aufgesetzt, wobei die Schließwand 3 einen Ausschnitt 22 aufweist, die den Bogenabschnitt 12 des Tunnelelementes 10 umfasst und einschließt.

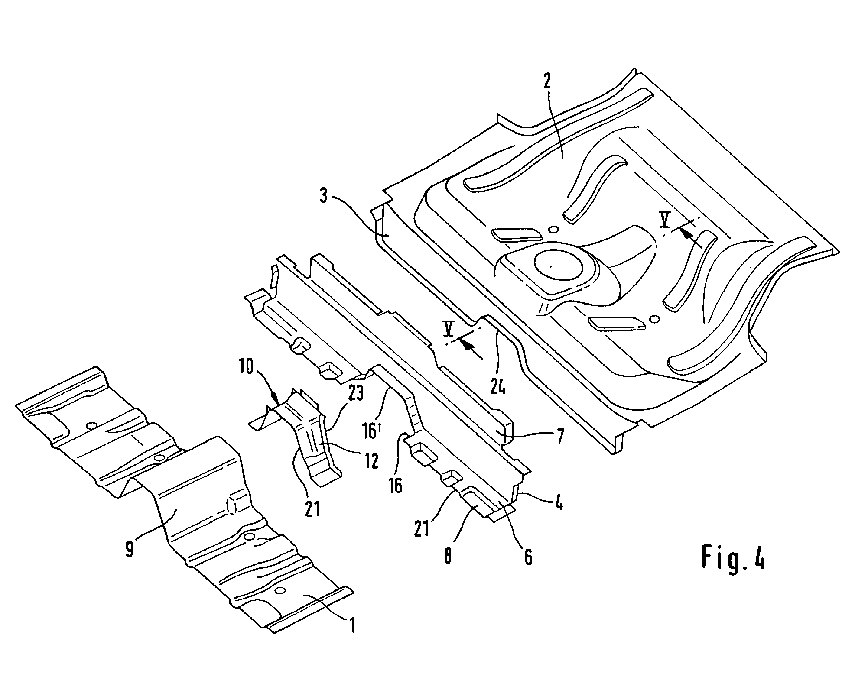

Fig. 4 zeigt eine etwas andere Ausführungsform der Erfindung. Das Tunnelelement 10 besteht lediglich aus einem Bogenabschnitt 12 mit einem im Wesentlichen gleichbleibenden Querschnitt. Die hintere Kante 23 wird mit der Schließwand 3 verbunden. Das Verstärkungsprofil 4 besteht aus einem Einzelteil, das wiederum einen Horizontalabschnitt 6 einen Vertikalabschnitt 7 und einen Verlängerungsabschnitt 8 aufweist, wobei im Horizontalabschnitt ebenfalls eine Aussparung 16 verbleibt, die vom Bogenabschnitt 12 überspannt wird. Auch im Vertikalabschnitt 7 befindet sich eine Aussparung 16', deren U-förmiger Querschnitt kleiner ist als der des Bogenabschnittes 12 und die mit einem entsprechenden Ausschnitt 24 in der Schließwand 3 korrespondiert. Wenn das Verstärkungsprofil 4 und die hintere Bodenplatte 2 mit der Schließwand 3 zusammengesetzt werden, ergibt sich ein im Querschnitt geschlossener Verstärkungskasten, dessen Querschnittsfläche in den Seitenbereichen etwas größer ist als die in einer gedachten Verlängerung des Mitteltunnels 9.

Das Tunnelelement 10 stößt mit seiner hinteren Kante 23 gegen die Schließwand 3 und wird dort mit ihr verschweißt. Die vordere Kanten 21 des Horizontalabschnittes sowie des Tunnelelementes 10 verlaufen dann in einer Horizontalebene und können mit der entsprechenden Kante der vorderen Bodenplatte 1 bzw. Mitteltunnel 9 überlappend verbunden werden.

Fig. 5 zeigt zur Verdeutlichung einen Querschnitt entlang der Linie V-V. Im Bereich des Mitteltunnels bzw. des Bogenabschnittes 12 des Tunnelelementes 10 ist der Querschnitt des Verstärkungskastens zwar gegenüber den Seitenbereichen verkleinert, aber aufgrund der gewählten Konstruktion doch so groß, dass der untere Abschnitt in den Querschnitt des Mitteltunnels 9 hineinragt.

## Patentansprüche

1. Fahrzeugkarosserieboden
mit einer vorderen Bodenplatte und einer hinteren Bodenplatte, wobei die hintere höher liegt als die vordere und an der hinteren Bodenplatte sich eine in etwa vertikal verlaufende Schließwand anschließt, um den Abstand zwischen den Platten zu überbrücken,
mit einem sich quer erstreckenden L-förmigen Verstärkungsprofil unterhalb der hinteren Bodenplatte mit einem sich im Wesentlichen parallel zur Schließwand erstreckenden Vertikalabschnitt und einem Horizontalabschnitt,
wobei das Verstärkungsprofil derart mit der hinteren Bodenplatte und der Schließwand verbunden ist, dass ein sich in Querrichtung des Fahrzeuges erstreckender Verstärkungskasten entsteht,
wobei der Horizontalabschnitt (6) in einen Verlängerungsabschnitt (8) übergeht, der über die Schließwand (3) nach vorne hinausragt und entlang seiner vorderen Kante (21) mit der vorderen Bodenplatte (1) verbunden ist,
wobei die Verbindungslinie im Abstand zur Schließwand (3) verläuft, und
wobei die vordere Bodenplatte (1) einen Mitteltunnel (9) aufweist und der Verlängerungsabschnitt (8) mit einem einen Bogenabschnitt (12) aufweisenden Tunnelelement (10) versehen ist,
wobei der Querschnitt des Mitteltunnels (9) mit dem Querschnitt des Bogenabschnittes (12) übereinstimmt, so dass der Bogenabschnitt (12) eine Verlängerung des Mitteltunnels (9) bildet und der rückwärtige Abschluss des Tunnelelements (10) in den Vertikalabschnitt (7) des Verstärkungsprofils (4) übergeht, **dadurch gekennzeichnet, dass**
zwischen dem Bogenabschnitt (12) des Tunnelelements (10) und dem Vertikalabschnitt (7) des Verstärkungsprofils ein Sattel (17) gebildet ist.

2. Fahrzeugkarosserie nach Anspruch 1, **dadurch gekennzeichnet, dass** die Schließwand (3) einen Ausschnitt (22) aufweist, in den der Bogenabschnitt (12) des Tunnelelementes (10) eingepasst ist.

3. Fahrzeugkarosserie nach Anspruch 2, **dadurch gekennzeichnet, dass** das Verstärkungsprofil (4) aus mindestens zwei Teilen besteht, wobei ein erstes Teil vom Tunnelelement (10) gebildet ist, das aus dem Bogenabschnitt (12) und einer Flanke des Sattels (17) besteht.

4. Fahrzeugkarosserie nach Anspruch 3, **dadurch gekennzeichnet, dass** der Abschnitt des Verstärkungsprofils (4), der nicht vom Tunnelelement (10) gebildet ist, aus zwei im Wesentlichen zur Längsachse des Karosseriebodens spiegelsymmetrischen Profilelementen (11a, 11b) zusammengesetzt ist.

5. Fahrzeugkarosserieboden
mit einer vorderen Bodenplatte und einer hinteren Bodenplatte, wobei die hintere höher liegt als die vordere und an der hinteren Bodenplatte sich eine in etwa vertikal verlaufende Schließwand anschließt, um den Abstand zwischen den Platten zu überbrücken,
mit einem sich quer erstreckenden L-förmigen Verstärkungsprofil unterhalb der hinteren Bodenplatte mit einem sich im Wesentlichen parallel zur Schließwand erstreckenden Vertikalabschnitt und einem Horizontalabschnitt,
wobei das Verstärkungsprofil derart mit der hinteren Bodenplatte und der Schließwand verbunden ist, dass ein sich in Querrichtung des Fahrzeuges erstreckender Verstärkungskasten entsteht,
wobei der Horizontalabschnitt (6) in einen Verlängerungsabschnitt (8) übergeht, der über die Schließwand (3) nach vorne hinausragt und entlang seiner vorderen Kante (21) mit der vorderen Bodenplatte (1) verbunden ist,
wobei die Verbindungslinie im Abstand zur Schließwand (3) verläuft, und
wobei die vordere Bodenplatte (1) einen Mitteltunnel (9) aufweist und der Verlängerungsabschnitt (8) mit einem einen Bogenabschnitt (12) aufweisenden Tunnelelement (10) versehen ist,
wobei der Querschnitt des Mitteltunnels (9) mit dem Querschnitt des Bogenabschnittes (10) übereinstimmt, so dass der Bogenabschnitt (12) eine Verlängerung des Mitteltunnels (9) bildet,
**dadurch gekennzeichnet, dass**
der Bogenabschnitt (12) des Tunnelelements (10) einen U-förmigen Querschnitt aufweist, der gegen die Schließwand (3) gesetzt ist, wobei ein Teilstück der Schließwand (3) den oberen Teil der Querschnittsfläche des Bogenabschnittes (12) überdeckt.

6. Karosserieboden nach Anspruch 5, **dadurch gekennzeichnet, dass** das Tunnelelement (10) als Einzelteil ausgebildet ist und einen über seine Länge im Wesentlichen gleichbleibenden Querschnitt aufweist und an seinen hinteren Enden mit Flanschen versehen ist, die gegen die Schließwand (3) gesetzt sind.

7. Karosserieboden nach Anspruch 6, **dadurch gekennzeichnet, dass** der Verstärkungskasten (5) in einer gedachten Verlängerung des Mitteltunnels einen geschlossenen Querschnitt aufweist, wobei der untere Bereich des Kastens den oberen Teil der Querschnittsfläche des Bogenabschnittes (12) überdeckt.

8. Karosserieboden nach Anspruch 7, **dadurch gekennzeichnet, dass** der Vertikalabschnitt (7) in einer gedachten Verlängerung des Mitteltunnels eine U-förmige Aussparung (16') aufweist, die in einen entsprechenden Ausschnitt (24) in der Schließwand (3) eingepasst ist.

## Claims

1. A vehicle body floor, comprising a front base plate and a rear base plate, with the rear one being disposed higher than the front one and an approximately vertically extending closing wall being adjacent to the rear base plate in order to bridge the distance between the two plates, a transversally extending L-shaped reinforcing section beneath the rear base plate with a vertical section extending substantially parallel to the closing wall and a horizontal section, with the reinforcing profile being connected in such a way with the rear base plate and the closing wall that a reinforcing box is obtained which extends in the transversal direction of the vehicle, with the horizontal section (6) converging into an extension section (8) which protrudes beyond the closing wall (3) to the front and is connected along its front edge (21) with the front base plate (1), with the connecting line extending at a distance from the closing wall (3), and with the front base plate (1) having a central tunnel (9) and the extension section (8) being provided with a tunnel element (10) having an arc section (12), with the cross section of the central tunnel (9) coinciding with the cross section of the arc section (12), so that the arc section (12) forms an extension of the central tunnel (9) and the rear end of the tunnel element (10) converges into the vertical section (7) of the reinforcing section (4), a saddle (17) is formed between the arc section (12) of the tunnel element (10) and the vertical section (7) of the reinforcing section.

2. A vehicle body according to claim 1, **characterized in that** the closing wall (3) has a section (22) into which the arc section (12) of the tunnel element (10) is fitted.

3. A vehicle body according to claim 2, **characterized in that** the reinforcing section (4) consists of at least two parts, with a first part being formed by the tunnel element (10) which consists of the arc section (12) and one flank of the saddle (17).

4. A vehicle body according to claim 3, **characterized in that** the section of the reinforcing profile (4) which is not formed by the tunnel element (10) is composed of two section elements (11a, 11b) which are substantially mirror-symmetrical in relation to the longitudinal axis of the floor of the body.

5. A vehicle body floor, comprising a front base plate and a rear base plate, with the rear one being disposed higher than the front one and an approximately vertically extending closing wall being adjacent to the rear base plate in order to bridge the distance between the plates, a transversally extending L-shaped reinforcing section beneath the rear base plate with a vertical section extending substantially parallel to the closing wall and a horizontal section, with the reinforcing profile being connected in such a way with the rear base plate and the closing wall that a reinforcing box is obtained which extends in the transversal direction of the vehicle, with the horizontal section (6) converging into an extension section (8) which protrudes beyond the closing wall (3) to the front and is connected along its front edge (21) with the front base plate (1), with the connecting line extending at a distance from the closing wall (3), and with the front base plate (1) having a central tunnel (9) and the extension section (8) being provided with a tunnel element (10) having an arc section (12), with the cross section of the central tunnel (9) coinciding with the cross section of the arc section (10), so that the arc section (12) forms an extension of the central tunnel (9), **characterized in that** the arc section (12) of the tunnel element (10) has a U-shaped cross section which is placed against the closing wall (3), with a partial section of the closing wall (3) covering the upper part of the cross-sectional area of the arc section (12).

6. A vehicle floor according to claim 5, **characterized in that** the tunnel element (10) is arranged as a single part and has a cross section which remains substantially the same over its length and is provided at its rear end with flanges which are placed against the closing wall (3).

7. A vehicle floor according to claim 6, **characterized in that** the reinforcing box (5) has a closed cross section in an imaginary extension of the central tunnel, with the bottom region of the box covering the upper part of the cross-sectional area of the arc section (12).

8. A vehicle floor according to claim 7, **characterized in that** the vertical section (7) has a U-shaped recess (16') in an imaginary extension of the central tunnel, which recess is fitted into a respective section (24) in the closing wall (3).

## Revendications

1. Plancher de carrosserie de véhicule
avec un panneau de plancher avant et un panneau de plancher arrière, dans lequel le panneau de plancher arrière se trouve plus haut que le panneau de plancher avant et une paroi de fermeture approximativement verticale se raccorde au panneau de plancher arrière afin de franchir l'écart entre les panneaux,
avec un profilé de renfort en forme de L s'étendant transversalement en dessous du panneau de plancher arrière avec une partie verticale sensiblement parallèle à la paroi de fermeture et une partie horizontale,
dans lequel le profilé de renfort est relié au panneau de plancher arrière et à la paroi de fermeture de telle façon qu'il se crée un caisson de renfort s'étendant dans le sens transversal du véhicule,
dans lequel la partie horizontale (6) est suivie d'une partie de prolongement (8) qui dépasse vers l'avant au-delà de la paroi de fermeture (3) et qui est reliée le long de son bord avant (21) au panneau de plancher avant (1),
dans lequel la ligne de liaison passe à distance de la paroi de fermeture (3), et
dans lequel le panneau de plancher avant (1) présente un tunnel central (9) et la partie de prolongement (8) est munie d'un élément formant tunnel (10) présentant une partie en arc de cercle (12),
dans lequel la section du tunnel central (9) coïncide avec la section de la partie en arc de cercle (12), de sorte que la partie en arc de cercle (12) forme un prolongement du tunnel central (9) et la fermeture arrière de l'élément formant tunnel (10) est suivie de la partie verticale (7) du profilé de renfort (4),
**caractérisé en ce qu'**une ensellure (17) est formée entre la partie en arc de cercle (12) de l'élément formant tunnel (10) et la partie verticale (7) du profilé de renfort.

2. Carrosserie de véhicule selon la revendication 1, **caractérisée en ce que** la paroi de fermeture (3) présente une découpe (22) dans laquelle la partie en arc de cercle (12) de l'élément de tunnel (10) est adaptée.

3. Carrosserie de véhicule selon la revendication 2, **caractérisée en ce que** le profilé de renfort (4) se compose d'au moins deux parties, une première partie étant formée par l'élément formant tunnel (10), qui se compose de la partie en arc de cercle (12) et d'un flanc de l'ensellure (17).

4. Carrosserie de véhicule selon la revendication 3, **caractérisée en ce que** la partie du profilé de renfort (4) qui n'est pas formée par l'élément formant tunnel (10) est composée de deux éléments profilés (11a, 11b) sensiblement symétriques en miroir par rapport à l'axe longitudinal du plancher de carrosserie.

5. Plancher de carrosserie de véhicule
avec un panneau de plancher avant et un panneau de plancher arrière, dans lequel le panneau de plancher arrière se trouve plus haut que le panneau de plancher avant et une paroi de fermeture approximativement verticale se raccorde au panneau de plancher arrière afin de franchir l'écart entre les panneaux,
avec un profilé de renfort en forme de L s'étendant transversalement en dessous du panneau de plancher arrière avec une partie verticale sensiblement parallèle à la paroi de fermeture et une partie horizontale,
dans lequel le profilé de renfort est relié au panneau de plancher arrière et à la paroi de fermeture de telle façon qu'il se crée un caisson de renfort s'étendant dans le sens transversal du véhicule,
dans lequel la partie horizontale (6) est suivie d'une partie de prolongement (8) qui dépasse vers l'avant au-delà de la paroi de fermeture (3) et qui est reliée le long de son bord avant (21) au panneau de plancher avant (1),
dans lequel la ligne de liaison passe à distance de la paroi de fermeture (3), et
dans lequel le panneau de plancher avant (1) présente un tunnel central (9) et la partie de prolongement (8) est munie d'un élément formant tunnel (10) avec une partie en arc de cercle (12),
dans lequel la section du tunnel central (9) coïncide avec la section de la partie en arc de cercle (10), de sorte que la partie en arc de cercle (12) forme un prolongement du tunnel central (9),
**caractérisé en ce que** la partie en arc de cercle (12) de l'élément formant tunnel (10) a une section en forme de U qui est posée contre la paroi de fermeture (3), une partie de la paroi de fermeture (3) recouvrant la partie supérieure de la surface en section de la partie en arc de cercle (12).

6. Plancher de carrosserie selon la revendication 5, **caractérisé en ce que** l'élément formant tunnel (10) est conformé d'une pièce et présente une section sensiblement constante sur sa longueur et est muni à son extrémité arrière de brides qui sont posées contre la paroi de fermeture (3).

7. Plancher de carrosserie selon la revendication 6, **caractérisée en ce que** le caisson de renfort (5) présente dans un prolongement imaginaire du tunnel central une section fermée, la partie inférieure du caisson recouvrant la partie supérieure de la surface en section de la partie en arc de cercle (12).

8. Plancher de carrosserie selon la revendication 7, **caractérisée en ce que** la partie verticale (7) présente, dans un prolongement imaginaire du tunnel central, une ouverture en forme de U (16') qui est adaptée dans une découpe correspondante (24) dans la paroi de fermeture (3).
